# EUROPÄISCHE PATENTSCHRIFT

(11) **EP 0 859 226 B1**
(45) Veröffentlichungstag und Bekanntmachung des Hinweises auf die Patenterteilung: **02.05.2003**
(21) Anmeldenummer: 98100684.4
(22) Anmeldetag: 16.01.1998
(51) Int. Cl.: G01M 15/00, F01M 11/10

(54) **Verfahren und Vorrichtung zur Bestimmung des verbleibenden Teils eines Ölwechselintervalls einer Brennkraftmaschine**
Method and device for determining the remaining part of an oil change interval of a combustion engine
Méthode et dispositif pour déterminer la partie restante d'un intervalle de vidange d'huile d'un moteur à combustion

(30) Priorität: 17.02.1997 DE 19705946
(43) Veröffentlichungstag der Anmeldung: 19.08.1998
(73) Patentinhaber: AUDI AG, 85045 Ingolstadt (DE)
(72) Erfinder: Huber, Karl, Dr., 85072 Eichstätt (DE)

(56) Entgegenhaltungen:
- EP-A- 0 793 005
- DE-A- 3 104 196
- DE-A- 3 110 774
- DE-A- 3 234 727
- DE-A- 4 401 835
- DE-C- 4 306 270
- US-A- 4 970 492
- US-A- 5 006 829
- US-A- 5 060 156
- US-A- 5 382 942

## Beschreibung

Die vorliegende Erfindung betrifft ein Verfahren zur Bestimmung des verbleibenden Teils eines Ölwechselintervalls einer Brennkraftmaschine sowie eine Vorrichtung zur Durchführung dieses Verfahrens.

Es sind eine Reihe von Verfahren bekannt, welche den verbleibenden Teil eines Ölwechselintervalls durch Untersuchung des Schmieröls oder aber in Abhängigkeit von den Betriebsparametern der Brennkraftmaschine ermitteln.

Aus der DE 31 10 774 A1 ist es bekannt, zur Ermittlung eines voraussichtlichen Ölwechsels den erfassten Benzinverbrauch heranzuziehen. Aus der DE 32 34 727 A1 ist es bekannt, den Verschleiß des Motorenöls unter Heranziehung von Wichtungsfaktoren für die Öltemperatur und der Umdrehungszahl durchzuführen. Um bei einem derartigen Verfahren zur Erzielung zufriedenstellender Ergebnisse auch die Motorbelastung mit heranzuziehen, sind jedoch neben der Umdrehungszahl weitere nicht explizit genannte zusätzliche Betriebsparameter zu berücksichtigen.

Die Ermittlung anhand der Betriebsparameter soll möglichst einfach und dennoch genau erfolgen. Dabei muß berücksichtigt werden, daß nicht zu viele verschiedene Parameter der Berechnung zugrunde gelegt werden und die verwendeten Parameter leicht zugänglich sowie aussagekräftig sind. Außerdem sollen die zu speichernden Daten oder Kennfelder für das Verfahren bzw. die Vorrichtung auf ein Minimum reduziert werden.

Es ist daher Aufgabe der vorliegenden Erfindung, ein Verfahren und eine entsprechende Vorrichtung zu konzipieren, welche dahingehend verbessert sind, daß eine nur geringe Anzahl von vorgegebenen Daten/Kennfeldern gespeichert werden muß und dennoch eine genaue Bestimmung des verbleibenden Teils des Ölwechselintervalls der Brennkraftmaschine realisierbar ist. Außerdem soll das Verfahren sowie die Vorrichtung kostengünstig durchführbar bzw. herstellbar sein.

Gelöst wird diese Aufgabe durch die Verfahrensmerkmale des Patentanspruchs 1, wobei Öltemperatur und Kraftstoffverbrauch der Brennkraftmaschine erfaßt werden, die Öltemperaturen mittels vorgegebener Verschlechterungsfaktoren bewertet werden, der Kraftstoffverbrauch bewertet wird, indem über bestimmte Zeitintervalle die Summe des erfaßten Kraftstoffverbrauchs gebildet und mit dem Verschlechterungsfaktor der momentanen Öltemperatur multipliziert wird, die Summe des bewerteten Kraftstoffverbrauchs gebildet wird und der verbleibende Teil des Ölwechselintervalls als Funktion der Differenz aus einem vorgegebenen Kraftstoffverbrauchsmaximalwert und dem gesamten Kraftstoffverbrauch ermittelt wird. Dadurch, daß der bewertete Kraftstoffverbrauch aus der Summe des Kraftstoffverbrauchs während bestimmter Zeitintervalle multipliziert mit dem Verschlechterungsfaktor der aktuellen Öltemperatur gebildet wird, können zusätzliche Daten bzw. kann ein zusätzliches Kennfeld für einen weiteren Verschlechterungsfaktor zur Bewertung des Kraftstoffverbrauchs entfallen. Zudem benötigt dieses Verfahren keine reinen Wertepaare. Dies ist deshalb besonders positiv, da sich die Dynamik der erfaßten Größen Öltemperatur und Kraftstoffverbrauch deutlich unterscheidet, so daß die relativ träge Öltemperatur in weitaus größeren zeitlichen Abständen erfaßt werden kann als der Kraftstoffverbrauch. Trotz der erheblichen Datenreduktion ergeben sich bei dieser Vorgehensweise sehr gute auf die tatsächliche Qualität des Schmieröls abgestimmte Ergebnisse. Dies ist nicht zuletzt auf die Verwendung des fest vorgegebenen Kraftstoffverbrauchsmaximalwertes zurückzuführen, da die Verwendung des Kraftstoffverbrauchsmaximalwerts einen wichtigen Schwellenwert des Verfahrens darstellt.

Bevorzugt sind die Zeitintervalle, innerhalb welcher der erfaßte Kraftstoffverbrauch aufsummiert wird, jeweils größer oder gleich drei Sekunden. Diese zeitlichen Abstände haben sich mit Rücksicht auf die Genauigkeit des Verfahrens und die Anzahl der zu erfassenden Wertepaare als vernünftiges Maß bewährt. Denn somit wird der großen Anzahl von erfaßten Werten des Kraftstoffverbrauchs pro drei Sekunden nur ein Wert der Öltemperatur gegenübergestellt.

Vorteilhaft werden die Werte der Öltemperatur in verschiedene Bereiche unterteilt, denen jeweils ein bestimmter Verschlechterungsfaktor A zugeordnet wird, dessen Werte zwischen 1 und 10 liegen. Auf diese Weise können ganze Kennfelder durch wenige Werte ersetzt werden. Dadurch reduziert sich zudem der zeitliche Aufwand bei der Ermittlung der bewerteten Öltemperaturen.

Besonders vorteilhaft wird der Kraftstoffverbrauch pro Zylinder der Brennkraftmaschine erfaßt. Dadurch kann den individuellen Gegebenheiten von Motoren mit vier, sechs oder acht Zylindern Rechnung getragen werden, denn ein Motor mit einer großen Anzahl von Zylindern hat zwangsläufig auch eine entsprechend größere Menge an Schmieröl. Der Kraftstoffverbrauch pro Zylinder der Brennkraftmaschine kann dabei einfach als Signal der Motorsteuerung, welches mit einer motorspezifischen Konstanten multipliziert wird, abgegriffen werden. In die motorspezifische Konstante kann dann die Anzahl der Zylinder sowie der Typ der Brennkraftmaschine - also Otto- oder Dieselmotor - einfließen.

Gemäß einer bevorzugten Ausführungsform der vorliegenden Erfindung kann der verbleibende Teil des Ölwechselintervalls aus der Differenz des aktuellen Kilometerstands und dem gespeicherten Kilometerstand des letzten Ölwechsels multipliziert mit der Differenz aus dem vorgegebenen Kraftstoffverbrauchsmaximalwert und dem gesamten Kraftstoffverbrauch dividiert durch den gesamten Kraftstoffverbrauch errechnet werden.

Es hat sich bewährt, wenn der Kraftstoffverbrauchsmaximalwert mit 1.000 Litern pro Zylinder der Brennkraftmaschine angesetzt wird. Denn aus dieser Ausgangsgröße lassen sich mit dem erfindungsgemäßen Verfahren besonders gute Ergebnisse ableiten.

Zweckmäßig wird die Berechnung des verbleibenden Teils des Ölwechselintervalls jeweils in Wegabständen von ca. 500 Kilometern vorgenommen. Dadurch kann der Aufwand zur Bestimmung des verbleibenden Teils des Ölwechselintervalls weiter verringert werden.

Besonders zweckmäßig ist es, wenn der Startwert für den verbleibenden Teil des Ölwechselintervalls auf 20.000 Kilometer festgesetzt wird. Auf diese Weise wird für den ersten Wegabstand bereits ein fester Wert vorgegeben, der sich mit zunehmender Anzahl der geleisteten Kilometer bzw. Wegabstände korrigiert bzw. präzisiert.

Die Aufgabe der Erfindung wird in entsprechender Weise auch durch die Vorrichtung mit den Merkmalen des Patentanspruchs 9 gelöst.

Vorteilhafte Weiterbildungen sind in den abhängigen Ansprüchen offenbart.

Die vorliegende Erfindung wird unter Bezugnahme auf die nachfolgenden Zeichnungsfiguren näher erläutert. Es zeigen:
- Figur 1: ein Diagramm, das die Beziehung zwischen der Öltemperatur und dem Verschlechterungsfaktor A darstellt;
- Figur 2: ein Flußdiagramm des vorgeschlagenen Verfahrens; und
- Figur 3: ein Blockdiagramm der entsprechenden Vorrichtung in vereinfachter, schematischer Darstellung.

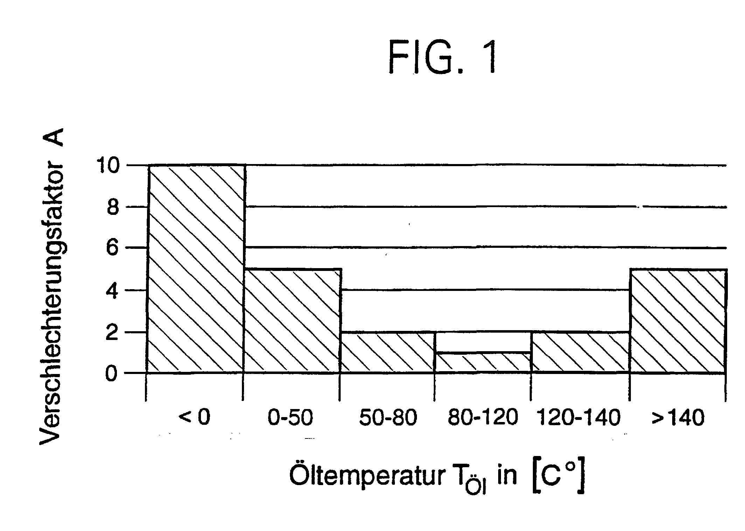

In Figur 1 ist die Beziehung zwischen der Öltemperatur T_{öl} und dem Verschlechterungsfaktor A gezeigt. Es sind insgesamt sechs verschiedene Bereiche der Öltemperatur T_{öl} festgelegt, nämlich <0°C, 0-50°C, 50-80°C, 80-120°C, 120-140°C und >140°C. Jedem dieser Temperaturbereiche ist ein Verschlechterungsfaktor A zugeordnet, der Werte zwischen 1 und 10 annimmt. Das Minimum des Verschlechterungsfaktors A liegt beim Temperaturbereich 80-120°C. Sowohl zu den höheren Temperaturbereichen als auch zu den tieferen Temperaturbereichen steigt der Verschlechterungsfaktor A an. Das Maximum des Verschlechterungsfaktors A liegt beim Temperaturbereich <0°C.

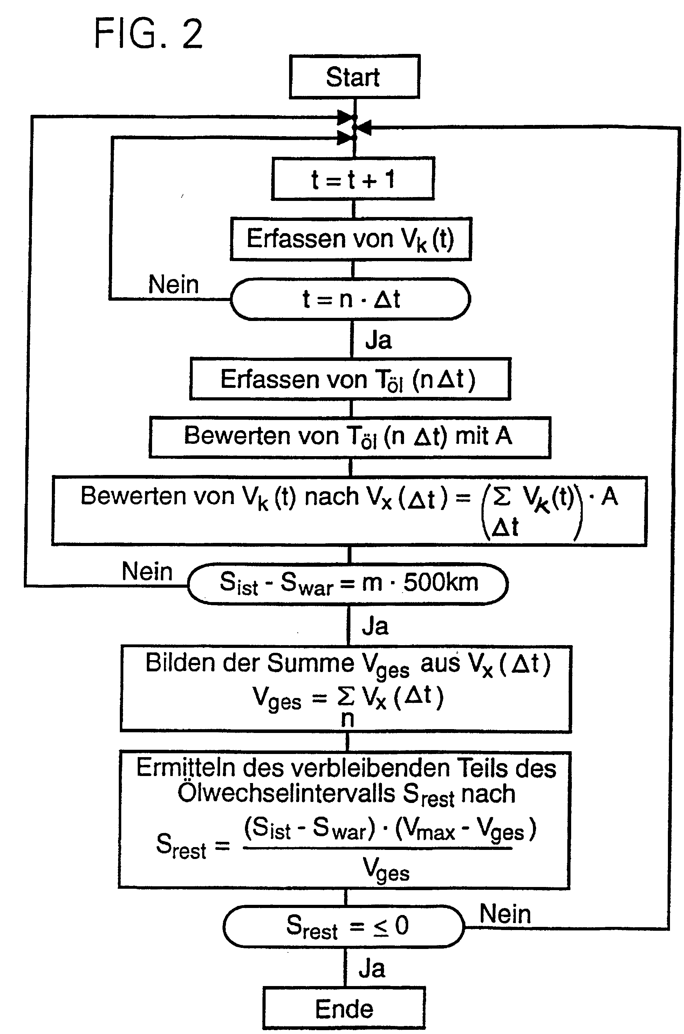

Der Ablauf eines besonders bevorzugten Verfahrens gemäß der vorliegenden Erfindung ist aus Figur 2 entnehmbar.

Mit einer Frequenz von ca. 0,1 Hz werden die Kraftstoffverbrauchswerte Vₖ pro Zylinder erfaßt und alle 3 Sekunden werden Öltemperaturwerte T_{öl} erfaßt. Die Öltemperaturen T_{öl} werden dabei jeweils mit den aus der Figur 1 entnehmbaren zugeordneten Verschlechterungsfaktoren A bewertet.

Der Kraftstoffverbrauch Vₖ pro Zylinder wird dagegen auf ganz andere Weise bewertet. Hierzu wird die Summe des im letzten Zeitintervall Δt, das ca. drei Sekunden beträgt, erfaßten Kraftstoffverbrauchs Vₖ gebildet und mit dem aktuellen Verschlechterungsfaktor A der Öltemperatur T_{öl} multipliziert.

In einem weiteren Verfahrensschritt wird die Gesamtsumme V_{ges} des bewerteten Kraftstoffverbrauchs Vₓ gebildet.

Schließlich wird dann in einem letzten Verfahrensschritt der verbleibende Teil des Ölwechselintervalls Sᵣₑₛₜ ermittelt. Hierzu wird die Differenz aus dem aktuellen Kilometerstand Sᵢₛₜ und dem gespeicherten Kilometerstand des letzten Ölwechsels S_{war} mit der Differenz aus einem vorgegebenen Kraftstoffverbrauchsmaximalwert Vₘₐₓ und dem gesamten Kraftstoffverbrauch V_{ges} multipliziert und durch den gesamten Kraftstoffverbrauch V_{ges} dividiert.

Die letzten beiden Verfahrensschritte werden nur alle 500 Kilometer durchgeführt. Bis dahin bleibt die Anzeige des verbleibenden Teils des Ölwechselintervalls Sᵣₑₛₜ konstant beim vorhergehenden Wert.

Geht der so ermittelte verbleibende Teil des Ölwechselintervalls Sᵣₑₛₜ gegen 0, so ist der Zeitpunkt für den nächsten Ölwechsel erreicht. Mit dem Ölwechsel wird Sᵢₛₜ nun als S_{war} neu fixiert und kann der Startwert für Sᵣₑₛₜ zunächst wieder auf 20.000 Kilometer festgesetzt werden.

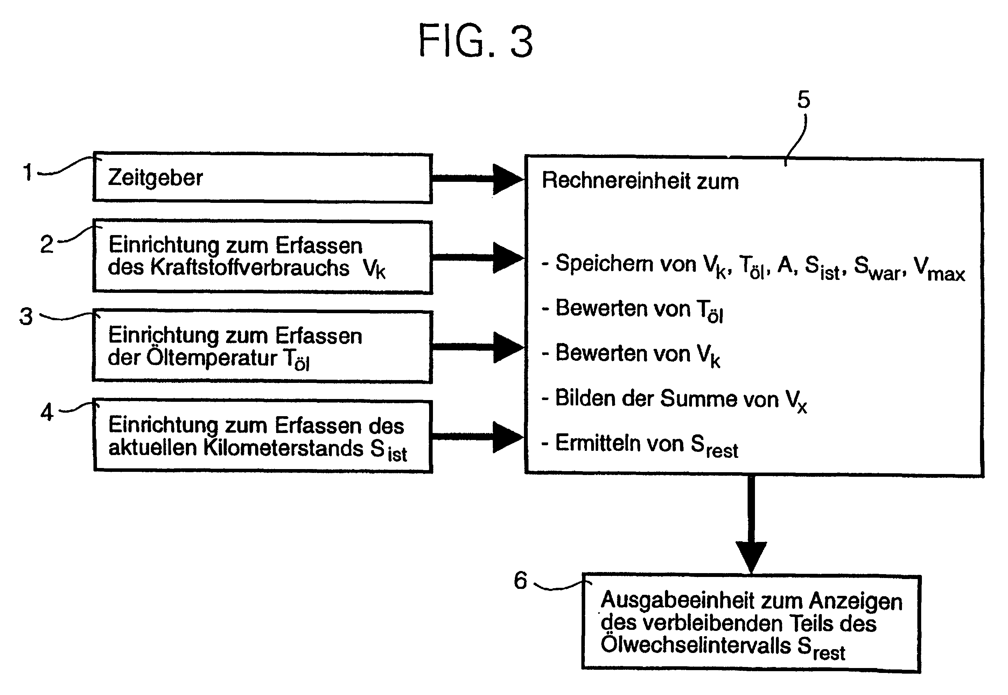

Figur 3 zeigt ein Blockdiagramm der zur Durchführung des Verfahrens vorgeschlagenen Vorrichtung. Diese Vorrichtung umfaßt einen Zeitgeber 1, eine erste Einrichtung 2 zum Erfassen des Kraftstoffverbrauchs Vₖ, eine zweite Einrichtung 3 zum Erfassen der Öltemperatur T_{öl}, eine dritte Einrichtung 4 zum Erfassen des geleisteten Teils des Ölwechselintervalls Sᵢₛₜ, eine Rechnereinheit 5 zum Speichern der erfaßten Werte Vₖ, T_{öl} sowie der vorgegebenen Konstanten A, S_{war}, Vₘₐₓ, zum Bewerten der Öltemperatur T_{öl} sowie dem Kraftstoffverbrauch Vₖ, zum Bilden der Summe V_{ges} des bewerteten Kraftstoffverbrauchs Vₓ und zum Bestimmen des verbleibenden Teils des Ölwechselintervalls Sᵣₑₛₜ. Gegebenenfalls ist auch eine Ausgabeeinheit 6 zum Anzeigen des verbleibenden Teils des Ölwechselintervalls Sᵣₑₛₜ vorgesehen.

## Patentansprüche

1. Verfahren zur Bestimmungen des verbleibenden Teils eines Ölwechselintervalls (Sᵣₑₛₜ) einer Brennkraftmaschine, darin bestehend,
- daß Öltemperatur (T_{öl}) und Kraftstoffverbrauch (Vₖ) der Brennkraftmaschine erfaßt werden,
- daß die Öltemperaturen (T_{öl}) mittels vorgegebener Verschlechterungsfaktoren (A) bewertet werden,
- daß der Kraftstoffverbrauch (Vₖ₎ bewertet wird, indem über bestimmte Zeitintervalle (Δt) die Summe des erfaßten Kraftstoffverbrauchs (Vₖ) gebildet und mit dem Verschlechterungsfaktor (A) der momentanen Öltemperatur (T_{öl}) multipliziert wird,
- daß die Summe (V_{ges}) des bewerteten Kraftstoffverbrauchs (Vₓ) gebildet wird, und
- daß der verbleibende Teil des Ölwechselintervalls (Sᵣₑₛₜ) als Funktion der Differenz aus einem vorgegebenen Kraftstoffverbrauchsmaximalwert (Vₘₐₓ) und der Summe (V_{ges}) des bewerteten Kraftstoffverbrauch (Vₓ) ermittelt wird.

2. Verfahren nach Anspruch 1, **dadurch gekennzeichnet, daß** die Zeitintervalle (Δt) ≥ 3 Sekunden sind.

3. Verfahren nach Anspruch 1 oder 2, **dadurch gekennzeichnet, daß** die Werte der Öltemperatur (T_{öl}) in verschiedene Bereiche unterteilt werden, denen jeweils ein bestimmter Verschlechterungsfaktor (A) zugeordnet wird, dessen Werte zwischen 1 und 10 liegen.

4. Verfahren nach einem der Ansprüche 1 bis 3, **dadurch gekennzeichnet, daß** der Kraftstoffverbrauch (Vₖ) pro Zylinder der Brennkraftmaschine erfaßt wird.

5. Verfahren nach einem der Ansprüche 1 bis 4, **dadurch gekennzeichnet, daß** der verbleibende Teil des Ölwechselintervalls (Sᵣₑₛₜ) nach der Formel ((Sᵢₛₜ - S_{war}) * (Vₘₐₓ - V_{ges})) / (V_{ges}) errechnet wird, wobei (Sᵢₛₜ) der aktuelle Kilometerstand und (S_{war}) der Kilometerstand des letzten Ölwechsels ist.

6. Verfahren nach einem der Ansprüche 1 bis 5, **dadurch gekennzeichnet, daß** ein Kraftstoffverbrauchsmaximalwert (Vₘₐₓ) der Brennkraftmaschine angesetzt wird.

7. Verfahren nach einem der Ansprüche 1 bis 6, **dadurch gekennzeichnet, daß** die Berechnung des verbleibenden Teils des Ölwechselintervalls (Sᵣₑₛₜ) jeweils in Wegabständen von ca. 500 Kilometern vorgenommen wird.

8. Verfahren nach einem der Ansprüche 1 bis 7, **dadurch gekennzeichnet, daß** für den verbleibenden Teil des Ölwechselintervalls (Sᵣₑₛₜ) ein Startwert von 20.000 Kilometer festgesetzt wird.

9. Vorrichtung zur Bestimmung des verbleibenden Teils eines Ölwechselintervalls (Sᵣₑₛₜ) einer Brennkraftmaschine, mit
- Einrichtungen (2, 3) zum Erfassen von Öltemperatur (T_{öl}) und Kraftstoffverbrauch (Vₖ), und
- einer Rechnereinheit (5) zum
- Speichern der erfaßten Öltemperaturen (T_{öl}) und Kraftstoffverbrauche (Vₖ),
- Speichern von Verschlechterungsfaktoren (A),
- Speichern eines vorgegebenen Kraftstoffverbrauchsmaximalwerts (Vₘₐₓ),
- Bewerten der Öltemperatur (T_{öl}) mit dem jeweiligen Verschlechterungsfaktor (A),
- Bewerten des Kraftstoffverbrauchs (Vₖ₎, indem über bestimmte Zeitintervalle (Δt) die Summe des erfaßten Kraftstoffverbrauchs (Vₖ) gebildet und mit dem Verschlechterungsfaktor (A) der momentanen Öltemperatur (T_{öl}) multipliziert wird,
- Bilden der Summe (V_{ges}) des bewerteten Kraftstoffverbrauchs (Vₓ), und
- Ermitteln des verbleibenden Teils des Ölwechselintervalls (Sᵣₑₛₜ) als Funktion der Differenz aus dem vorgegebenen Kraftstoffverbrauchsmaximalwert (Vₘₐₓ) und der Summe (V_{ges}) des bewerteten Kraftstoffverbrauchs (Vₓ).

10. Vorrichtung nach Anspruch 9, **dadurch gekennzeichnet, daß**
- die Rechnereinheit (5) auch zum Speichern des Kilometerstands des letzten Ölwechsels (S_{war}) dient, und
- eine weitere Einrichtung (4) zum Erfassen des aktuellen Kilometerstands (Sᵢₛₜ) vorgesehen ist.

11. Vorrichtung nach einem der Ansprüche 9 oder 10, **dadurch gekennzeichnet, daß** die Rechnereinheit (5) ferner auch zum Speichern eines für den verbleibenden Teil des Ölwechselintervalls (Sᵣₑₛₜ) vorgegebenen Startwerts dient.

## Claims

1. Method for determining the remaining part of an oil change interval (Sᵣₑₛₜ) of a combustion engine, including
• detection of oil temperature (Tₒᵢₗ) and fuel consumption (Vₖ) of the combustion engine,
• evaluation of oil temperatures (Tₒᵢₗ) by means of specified deterioration factors (A),
• evaluation of fuel consumption (Vₖ) by establishing the sum of detected fuel consumption (Vₖ) over specified time intervals (Δt) and multiplication by the deterioration factor (A) of a momentary oil temperature (Tₒᵢₗ),
• establishing the sum (V_{ges}) of evaluated fuel consumption (Vₓ), and
• determining the remaining part of an oil change interval (Sᵣₑₛₜ) as a function of difference from a specified fuel consumption maximum value (Vₘₐₓ) and the sum (V_{ges}) of an evaluated fuel consumption (Vₓ).

2. Method according to Claim 1, **characterised in that** the time intervals (Δt) ≥ 3 seconds.

3. Method according to Claim 1 or 2, **characterised in that** the values of oil temperature (Tₒᵢₗ) are divided into different areas which are associated with a specified deterioration factor (A) the values of which lie between 1 and 10.

4. Method according to one of Claims 1 to 3, **characterised in that** the fuel consumption (Vₖ) is determined per cylinder of the combustion engine.

5. Method according to one of Claims 1 to 4, **characterised in that** the remaining part of the oil change interval (Sᵣₑₛₜ) is calculated by the formula ((Sᵢₛₜ - S_{war}) x (Vₘₐₓ - V_{ges})) / (V_{ges}) where (Sᵢₛₜ) is the actual kilometre reading and (S_{war}) the kilometre reading of the last oil change.

6. Method according to one of Claims 1 to 5, **characterised in that** a fuel consumption maximum value (Vₘₐₓ) of the combustion engine is entered.

7. Method according to one of Claims 1 to 6, **characterised in that** the calculation of the remaining part of the oil change interval (Sᵣₑₛₜ) is made at distances of approximately 500 kilometres.

8. Method according to one of Claims 1 to 7, **characterised in that** a starting value of 20,000 kilometres is set for the remaining part of the oil change interval (Sᵣₑₛₜ).

9. Device for determining the remaining part of an oil change interval (Sᵣₑₛₜ) of a combustion engine, including
• devices (2, 3) for detection of oil temperature (Tₒᵢₗ) and fuel consumption (Vₖ), and
• a computer unit (5) for
• storing determined oil temperatures (Tₒᵢₗ) and fuel consumptions (Vₖ),
• storing deterioration factors (A),
• storing a specified fuel consumption maximum value (Vₘₐₓ),
• evaluation of oil temperature (Tₒᵢₗ) with respective deterioration factor (A),
• evaluation of fuel consumption (Vₖ) by establishing the sum of detected fuel consumption over specified time intervals (Δt) and multiplication by the deterioration factor (A) of momentary oil temperature (Tₒᵢₗ),
• establishing the sum (V_{ges}) of the evaluated fuel consumption (Vₓ), and
• determining the remaining part of the oil change interval (Sᵣₑₛₜ) as a function of difference between the specified fuel consumption maximum value (Vₘₐₓ) and the sum (V_{ges}) of the evaluated fuel consumption (Vₓ).

10. Device according to Claim 9, **characterised in that**
• the computer unit (5) also serves to store the kilometre reading at the last oil change (S_{war}), and
• an additional device (4) is provided for detecting the actual kilometre reading (Sᵢₛₜ).

11. Device according to one of Claims 9 or 10, **characterised in that** the computer unit (5) also serves to store a starting value as specified for the remaining part of the oil change interval (Sᵣₑₛₜ).

## Revendications

1. Procédé de détermination de la partie restante d'un intervalle de vidange d'huile (Sᵣₑₛₜ) d'un moteur à combustion interne, consistant à,
- détecter la température d'huile (Tₕᵤᵢₗₑ) et la consommation de carburant (Vₖ) du moteur à combustion,
- évaluer les températures d'huile (Tₕᵤᵢₗₑ) à l'aide de facteurs de dégradation (A) prédéterminés,
- évaluer la consommation de carburant (Vₖ) par formation, sur un intervalle de temps (Δt) déterminé, de la somme de la consommation de carburant (Vₖ) détectée et multiplication par le facteur de dégradation (A) de la température d'huile momentanée (Tₕᵤᵢₗₑ),
- formation de la somme (Vₜₒₜₐₗ) de la consommation de carburant (Vx) évaluée, et
- détermination de la partie restante de l'intervalle de vidange d'huile (Sᵣₑₛₜ) en fonction de la différence à partir d'une valeur maximale de consommation de carburant (Vₘₐₓ) prédéterminée et de la somme (Vₜₒₜₐₗ) de la consommation de carburant (Vₓ) évaluée.

2. Procédé selon la revendication 1, **caractérisé en ce que** les intervalles de temps (Δt) sont ≥ 3 secondes.

3. Procédé selon la revendication 1 ou 2, **caractérisé en ce que** les valeurs de la température d'huile (Tₕᵤᵢₗₑ) sont subdivisées en différentes zones à chacune desquelles est associé un facteur de dégradation (A) déterminé, dont les valeurs sont situées entre 1 et 10.

4. Procédé selon l'une des revendications 1 à 3, **caractérisé en ce que** la consommation de carburant (Vₖ) est détectée pour chaque cylindre du moteur à combustion interne.

5. Procédé selon l'une des revendication 1 à 4, **caractérisé en ce que** la partie restante de l'intervalle de vidange d'huile (Sᵣₑₛₜ) est calculée d'après la formule (S_{réel} - Sᵥᵣₐᵢ) * (Vₘₐₓ - Vₜₒₜₐₗ)/(Vₜₒₜₐₗ), où (S_{réel}) est le kilométrage réel et (Sᵥᵣₐᵢ) est le kilométrage de la dernière vidange d'huile.

6. Procédé selon l'une des revendications 1 à 5, **caractérisé en ce qu'**on applique une valeur maximale de consommation de carburant (Vₘₐₓ) du moteur à combustion interne.

7. Procédé selon l'une des revendications 1 à 6, **caractérisé en ce que** le calcul de la partie restante de l'intervalle de vidange d'huile (Sᵣₑₛₜ) est effectué chaque fois à des espacements kilométriques d'environ 500 kilomètres.

8. Procédé selon l'une des revendications 1 à 7, **caractérisé en ce qu'**une valeur initiale de 20.000 kilomètres est fixée pour la partie restante de l'intervalle de vidange d'huile (Sᵣₑₛₜ).

9. Dispositif de détermination de la partie restante d'un intervalle de vidange d'huile (Sᵣₑₛₜ) d'un moteur à combustion, comportant
- des dispositifs (2, 3) pour détecter la température d'huile (Tₕᵤᵢₗₑ) et la consommation de carburant (Vₖ), et
- une unité calculatrice (5), pour
- mémoriser les températures d'huile (Tₕᵤᵢₗₑ) et les consommations de carburant (Vₖ) détectées,
- mémoriser des facteurs de dégradation (A),
- mémoriser une valeur maximale de consommation de carburant (Vₘₐₓ) prédéterminée,
- évaluer la température d'huile (Tₕᵤᵢₗₑ) avec le facteur de dégradation (A) respectif,
- évaluer la consommation de carburant (Vₖ) en formant, sur des intervalles de temps (Δt) déterminés, la somme de la consommation de carburant (Vₖ) détectée et en multipliant par le facteur de dégradation (A) de la température d'huile (Tₕᵤᵢₗₑ) momentanée,
- former la somme (Vₜₒₜₐₗ) de la consommation de carburant (Vₓ) évaluée, et
- déterminer la partie restante de l'intervalle de vidange d'huile (Sᵣₑₛₜ) en fonction de la différence formée à partir de la valeur maximale de consommation de carburant (Vₘₐₓ) prédéterminée et de la somme (Vₜₒₜₐₗ) de la consommation de carburant (Vₓ) évaluée.

10. Dispositif selon la revendication 9, **caractérisé en ce que**
- l'unité calculatrice (5) sert également à mémoriser le kilométrage de la dernière vidange d'huile (Sᵥᵣₐᵢ), et
- un autre dispositif (4) est prévu pour détecter le kilométrage réel (S_{réel}).

11. Dispositif selon l'une des revendications 9 ou 10, **caractérisé en ce que** l'unité calculatrice (5) sert également à mémoriser une valeur initiale prédéterminée pour la partie restante de l'intervalle de vidange d'huile (Sᵣₑₛₜ).
